# EUROPÄISCHE PATENTSCHRIFT

(11) **EP 4 049 972 B1**
(45) Veröffentlichungstag und Bekanntmachung des Hinweises auf die Patenterteilung: **26.08.2026**
(21) Anmeldenummer: 21159501.2
(22) Anmeldetag: 26.02.2021
(51) Int. Cl.: C01F 7/14, C01F 7/44

(54) **VERFAHREN ZUR HERSTELLUNG VON PSEUDOBÖHMIT**
METHOD FOR THE PREPARATION OF PSEUDOBOEHMITE
PROCÉDÉ DE FABRICATION DE PSEUDO-BOEHMITE

(43) Veröffentlichungstag der Anmeldung: 31.08.2022
(73) Patentinhaber: Nabaltec AG, 92421 Schwandorf (DE)
(72) Erfinder: PESCHKE, Markus, 93149 Nittenau (DE); REIMER, Alfred, 93437 Furth im Wald (DE)
(74) Vertreter: Büchel, Edwin

(56) Entgegenhaltungen:
- EP-A2- 0 807 603
- EP-B1- 0 807 603
- WO-A1-2006/117190
- DE-B- 1 119 240
- JP-A- H08 268 715
- US-A- 2 898 307
- US-A- 5 468 892

## Beschreibung

Die vorliegende Erfindung betrifft ein Verfahren zur Herstellung von Pseudoböhmit, wobei der Schritt des Fällens von Pseudoböhmit aus einer wässrigen Alkalimetallaluminatlösung mit Hilfe einer wässrigen Fällungslösung, die Ameisensäure enthält, enthalten ist, wobei eine Reaktionssuspension aus Pseudoböhmit, Alkalimetallformiat und einer wässrigen Reaktionsflüssigkeit erhalten wird. Die Erfindung betrifft weiterhin ein Verfahren zur Herstellung von gamma-Aluminiumoxid (γ-Aluminiumoxid) aus derart hergestelltem Pseudoböhmit mit anschließender Dehydratisierung.

γ-Aluminiumoxide werden als Katalysatorträgermaterial und auch als Trocknungsmittel, Adsorbens und als Aktivkomponenten von Katalysatoren eingesetzt. Bei der Herstellung beeinflussen die physikalischen und chemischen Eigenschaften des Ausgangsmaterials die Eigenschaften des aktiven Endprodukts sehr stark.

Ein bedeutendes Ausgangsmaterial zur Herstellung von γ-Aluminiumoxiden ist Pseudoböhmit. Dabei handelt es sich um ein Aluminiumoxidhydroxid mit großer spezifischer Oberfläche und großem Porenvolumen. Umso größer diese Werte beim Pseudoböhmit sind, desto bessere Produkteigenschaften weisen auch die γ-Aluminiumoxide auf, welche durch Dehydratisierung daraus hergestellt werden. Außerdem ist häufig der Grad an Verunreinigung von entscheidender Bedeutung für die Anwendungen in der Katalyse. Hier ist vor allem Natrium als Verunreinigung zu nennen.

Zur Herstellung von Pseudoböhmit stehen mehrere Möglichkeiten zur Verfügung.

Hierbei besteht eine Möglichkeit zur Herstellung von Pseudoböhmit in der Zersetzung von organischen Aluminiumverbindungen (z.B. Methylate, Ethylate, Alkoholate...). Meist erfolgt die Zersetzung dabei über eine Hydrolyse. Auf diesem Weg wird Pseudoböhmit kommerziell als Nebenprodukt bei der Herstellung linearer Alkohole aus langkettigen Aluminiumalkoholaten über den Ziegler-Prozess erhalten.

Eine weitere Möglichkeit zur Herstellung von Pseudoböhmit besteht in der Reaktion von elementarem Aluminium mit Wasser. Zuvor wird hierbei Aluminium üblicherweise durch eine Amalgamation aktiviert.

Weiterhin besteht die Möglichkeit Pseudoböhmit durch Rehydratisierung von Schockkalzinat zu erhalten. Dabei wird zuerst Gibbsit sehr schnell dehydratisiert und im Anschluss das daraus entstandene Aluminiumoxid rehydratisiert.

Pseudoböhmit kann auch durch Umkristallisation einer Gibbsit-Suspension unter hydrothermaler Behandlung bei Temperaturen größer 150 °C hergestellt werden.

Schließlich besteht eine weitere Möglichkeit zur Herstellung von Pseudoböhmitz in der Neutralisation von Aluminiumsalzlösungen mit Basen oder von Alkalimetallaluminatlösungen (z.B. Natriumaluminatlauge) meist mit Kohlendioxid oder Säuren.

E. A. El-Katatny et al., J. Technol. Biotechnol. 1998, 72, 320-328, beschreiben die Herstellung von kristallinem Böhmit und γ-AlO(OH) aus einer Natriumaluminatlösung unter Zuhilfenahme von Wasserstoffperoxid. Nachteilig an diesem Verfahren ist der Einsatz von explosionsgefährlichem Wasserstoffperoxid, das eine großtechnische Umsetzung erschwert. Weiterhin sind sehr große Mengen erforderlich und das Verfahren ist kostenintensiv.

GB 1 440 194 beschreibt die Fällung aus Natriumaluminatlösung mit Hilfe von Kohlendioxid. Hierbei wird zunächst eine Natriumaluminatlösung mit Hilfe von Gibbsit durch Zugabe von Natriumhydroxid erhalten und anschließend Kohlendioxid eingeleitet. Der erhaltene Filterkuchen wird gealtert, um amorphes Böhmit in kristallines Böhmit umzuwandeln. Anschließend wird hieraus ein Aluminiumoxidsol durch Zugabe von Salpetersäure und anderen Säuren erzeugt. Die Herstellung von Pseudoböhmit mit Hilfe von Kohlendioxid erfordert jedoch eine Reaktionsführung unter Einleitung von Gasen, das einen höheren apparativen Aufwand bedeutet. Es ergibt sich eine schlechte Peptisierbarkeit unter normalen Bedingungen.

B. Ozimek et al., React. Kent. Catal. Lett., Vol. 13, N° 4, 311-317 (1980) beschreiben die Fällung von Pseudoböhmit aus einer Natriumaluminatlösung mit Hilfe von Salpetersäure. Aufgrund der Reaktivität von Salpetersäure und einer erhöhten Gefahr zur Erzeugung nitroser Gase ist jedoch der Einsatz von Salpetersäure insbesondere in großtechnischen Verfahren kritisch zu betrachten. Weiterhin führt die Verwendung von Salpetersäure zu nitrathaltigen Abwässern und die Auswaschbarkeit von Natrium ist erschwert.

Nachteilig beim Einsatz mineralischer Säuren, wie Salpetersäure, ist zudem die Verunreinigung des Produkts mit geringen Mengen an Anionen (Nitrat, Chlorid, Sulfat etc.). Diese Verunreinigungen können bei einem Großteil der potentiellen Anwendungen stören.

Außerdem führen mineralische Säuren zu einer überaus schnellen Fällung, wodurch sehr kleine Primärpartikel entstehen, welche bei der Filtration oftmals zu Schwierigkeiten führen. Außerdem lässt sich bei diesen Produkten Natrium oft nur schwer auswaschen.

WO 2001/012553 A1 beschreibt ein Verfahren zur Herstellung eines quasikristallinen Böhmit enthaltenden Additivs in einem homogen dispergierten Zustand. Bei diesem Verfahren werden ein kostengünstiger quasikristalliner Böhmit-Vorläufer und ein Additiv kombiniert und gealtert, um ein quasikristallinen Böhmit enthaltenden Additiv in einem homogen dispergierten Zustand zu bilden.

In US 4,202,870 A beschreibt die Herstellung von Aluminiumoxid durch Hydrolyse von Aluminiumalkoxylaten in einem kontinuierlichen Verfahren, wobei hydratisiertes Aluminiumoxid gealtert wird.

EP 0 807 603 A1 offenbart ein Verfahren zur Fällung von Aluminiumhydroxid, wobei eine Natriumaluminatlösung mit einer Säure zugesetzt wird.

Es besteht ein weiterer Bedarf an verbesserten Verfahren, bei denen die oben beschriebenen Nachteile zumindest teilweise vermieden werden. Hierbei soll es insbesondere möglich sein, ein peptisierbares Pseudoböhmit mit möglichst niedrigem Natriumgehalt, möglichst hoher spezifischer Oberfläche zu erreichen. Außerdem soll ein gut filtrierbares Produkt mit gut auswaschbaren Verunreinigungen erzeugt werden können.

Eine Aufgabe der vorliegenden Erfindung liegt in der Bereitstellung eines solchen verbesserten Verfahrens.

Die Aufgabe wird gelöst durch ein Verfahren zur Herstellung von Pseudoböhmit den Schritt enthaltend
a₀) Fällen von Pseudoböhmit aus einer wässrigen Alkalimetallaluminatlösung mit Hilfe einer wässrigen Fällungslösung, die Ameisensäure enthält, wobei eine Reaktionssuspension aus Pseudoböhmit, Alkalimetallformiat und einer wässrigen Reaktionsflüssigkeit erhalten wird, wobei der pH-Wert nach erfolgter Fällung in der Reaktionsflüssigkeit einen Wert im Bereich von 8 bis 10 aufweist und wobei nach Schritt a₀) ein Schritt
a₁) erfolgt, bei dem das ausgefallene Pseudoböhmit und die Reaktionsflüssigkeit getrennt werden.

Es hat sich überraschend gezeigt, dass durch die Verwendung von Ameisensäure bei der Fällung von Alkalimetallaluminaten Pseudoböhmit erhalten werden kann, wobei dieser gut peptisierbar ist. Außerdem ist es möglich, einen niedrigen Natriumgehalt zu erhalten. Die erfindungsgemäß hergestellten Pseudobömite weisen eine hohe spezifische Oberfläche auf. Außerdem wird ein gut filtrierbares Produkt mit gut auswaschbaren Verunreinigungen erzeugt.

Vorteilhaft erweist sich die Regenerierbarkeit von Ameisensäure durch eine stärkere mineralische Säure, wie Salzsäure.

Die Pepdisierbarkeit kann beispielhaft wie folgt beurteilt werden. Es wird vollentsalztes Wasser vorgelegt und Pseudoböhmit mit einem Feststoffgehalt von 7 Gew.-% zugegeben. Danach wird der pH-Wert der Suspension mit Hilfe von Salpetersäure auf pH = 2 eingestellt und es wird bis zur pH Konstanz gerührt. Eine Probe wird in ein Reagenzglas gefüllt und sedimentieren lassen. Anschließend wird das Sedimentationsverhalten in einem Reagenzglas über 6 Tage untersucht. Ausschlaggebend ist die Höhe des Sediments in mm nach 6 Tagen, die Beurteilung der Trübung und die Redispergierbarkeit des Sediments durch Schütteln.

Vorzugsweise handelt es sich bei der wässrigen Alkalimetallaluminatlösung um eine wässrige Natriumaluminatlösung.

Vorzugsweise weist die wässrige Alkalimetallaluminatlösung vor Beginn der Fällung eine Aluminiumkonzentration im Bereich von 1 g/l bis 50 g/l Lösung, mehr bevorzugt im Bereich von 4 g/l bis 22 g/l Lösung, weiter mehr bevorzugt im Bereich von 8 g/l bis 16 g/l Lösung, jeweils berechnet als Al₂O₃, auf.

Vorzugsweise weist die wässrige Alkalimetallaluminatlösung vor Fällung eine Alkalimetallionenkonzentration im Bereich von 32 mmol/I bis 1,6 mol/l Lösung, mehr bevorzugt im Bereich von 0,13 mol/l bis 0,71 mol/l Lösung, weiter mehr bevorzugt von 0,25 mol/l bis 0,5 mol/l Lösung, auf. Als Alkalimetallionen kommen insbesondere Natrium- und Kaliumionen in Frage. Herstellungsbedingt kann die Alkalimetallaluminatlösung mehrere unterschiedliche Alkalimetallionen aufweisen. Dann bezieht sich die Konzentration auf die Summe aller Alkalimetalle. Vorzugsweise weist die Alkalimetallaluminatlösung nur eine Sorte Alkalimetall auf. Bevorzugt ist dies Natrium. In diesem Fall weist dementsprechend die Natriumaluminatlösung vorzugsweise eine Konzentration im Bereich von 1 g/l bis 50 g/l, mehr bevorzugt von 4 g/l bis 22 g/l, weiter mehr bevorzugt von 8 g/l bis 16 g/l (jeweils berechnet als Na₂O) auf.

Vorzugsweise weist das Molverhältnis von Alkalimetall zu Aluminium in der wässrige Alkalimetallaluminatlösung vor Beginn der Fällung einen Wert im Bereich von 1,1 bis 3,0, mehr bevorzugt im Bereich von 1,3 bis 2,2, weiter mehr bevorzugt im Bereich von 1,4 bis 1,9, weiter mehr bevorzugt im Bereich von 1,5 bis 1,8.

Vorzugsweise weist die Reaktionsflüssigkeit einen pH-Wert nach erfolgter Fällung einen Wert im Bereich von 4 bis 12, vorzugsweise von 7 bis 11, mehr bevorzugt von 8 bis 10, auf.

Vorzugsweise besteht die wässrige Fällungslösung, die Ameisensäure enthält, nur aus Wasser und Ameisensäure. Vorzugsweise beträgt der Gewichtsanteil der Ameisensäure in der Fällungslösung einen Wert im Bereich von 1 Gew.-% bis 99,9 Gew.-%, mehr bevorzugt von 10 Gew.-% bis 99 Gew.-%, weiter mehr bevorzugt von 80 Gew.-% bis 92 Gew.-%, auf.

Grundsätzlich kann die wässrige Fällungslösung, die Ameisensäure enthält, zu der wässrigen Alkalimetallaluminatlösung zugegeben werden oder die wässrige Alkalimetallaluminatlösung kann zur Fällungslösung zugegen werden oder beide Lösungen werden gleichzeitig in eine Fällungszone eingespeist. Bevorzugt wird jedoch in Schritt a₀) die wässrige Fällungslösung, die Ameisensäure enthält, zu der wässrigen Alkalimetallaluminatlösung zugegeben. Dies erfolgt weiter bevorzugt unter ständiger Durchmischung. Diese ist vorteilhafterweise stark turbulent ausgebildet.

Es ist bevorzugt, dass Schritt a₀) in einem Zeitraum von 1 Minute bis 120 Minuten, mehr bevorzugt von 4 Minuten bis 30 Minuten, weiter mehr bevorzugt von 6 Minuten bis 15 Minuten, erfolgt.

Es ist weiterhin bevorzugt, dass Schritt a₀) bei einer Temperatur im Bereich von 0,1 °C bis 80 °C, vorzugsweise von 5 °C bis 50 °C, mehr bevorzugt von 10 °C bis 30 °C, durchgeführt wird.

Zur Erzeugung der Alkalimetallaluminatlösung kann Aluminiumhydroxid, wie beispielsweise Gibbsit, mit Alkalilauge, insbesondere Natronlauge, gelöst werden. Es ist daher weiter bevorzugt, dass vor Schritt a₀) die wässrige Alkalimetallaluminatlösung in einem Schritt a₋₁) durch Auflösen von Aluminiumhydroxid, bevorzugt Gibbsit, mit Alkalilauge erzeugt wird. Gibbsit fällt beispielsweise als Zwischenprodukt bei der Aluminiummetallherstellung an und eignet sich daher als Ausgangsmaterial zur Herstellung der Alkalimetallaluminatlösung.

Nach Schritt a₀) erfolgt ein Schritt a₁), bei dem das ausgefallene Pseudoböhmit und die Reaktionsflüssigkeit getrennt werden. Danach kann nach Schritt a₁) ein Schritt a₂) erfolgen, bei dem das abgetrennte Pseudoböhmit mehrfach gewaschen wird, vorzugsweise in einem Gegenstromverfahren. Dies dient der Reduzierung des Natriumgehaltes im Pseudoböhmit. Vorteilhafterweise kann dies beispielsweise derart ausgestaltet sein, dass die Abtrennung durch Filtrieren erfolgt. Dabei kann der Filterkuchen einmal oder vorzugsweise mehrmals, wie zweimal, dreimal und insbesondere viermal, hintereinander in Wasser resuspendiert und erneut filtriert werden. Hierbei wird das Waschwasser vorteilhaft im Prozess im Gegenstrom zum Pseudoböhmit geführt, um die notwendige Wassermenge gering zu halten.

Weiterhin kann aus der abgetrennten Reaktionsflüssigkeit das Alkalimetallformiat abgetrennt und vorzugsweise nach Überführung des Formiats in Ameisensäure, bevorzugt mit Hilfe einer starken Säure und optional anschließender Destillation oder Rektifikation, diese dem Schritt a₀) wieder zugeführt werden.

Durch die Neutralisation von Alkalimetallaluminat mit Ameisensäure entstehen Pseudoböhmit und Alkalimetallformiat. Die Ameisensäure wird also "verbraucht" und ist im Salz gebunden. Bevorzugt wird daher die Ameisensäure regeneriert. Dies kann durch Zugabe einer starken und günstigen mineralischen Säure wie beispielsweise Salzsäure zum Natriumformiat erfolgen. Dabei wird die Salzsäure verbraucht und es liegt unproblematisches Natriumchlorid als Nebenprodukt des Gesamtprozesses vor. Zudem wird die Ameisensäure regeneriert und kann beispielsweise durch Rektifikation abgetrennt und aufkonzentriert werden. Anschließend kann sie dem Prozess zur weiteren Fällung wieder zurückgeführt werden.

Dadurch werden die Vorteile durch die Verwendung von Ameisensäure und die Wiedergewinnung mit Hilfe einer günstigen mineralischen Säure kombiniert. Das Pseudoböhmit weist keine störenden Anionen durch mineralische Säuren auf und durch die Wiedergewinnung von Ameisensäure wird lediglich eine günstige mineralische Säure "verbraucht".

Ein weiterer Gegenstand der vorliegenden Information ist ein Verfahren zur Herstellung von gamma-Aluminiumoxid die Schritte enthaltend
a) Herstellen von Pseudoböhmit nach dem hierin beschriebenen erfindungsgemäßen Verfahren;
b) Dehydratisierung des in Schritt a) hergestellten Pseudoböhmits unter Erhalt des gamma-Aluminiumoxids.

Schritt b) kann nach dem Fachmann bekannten Verfahren durchgeführt werden.

So verweist beispielsweise Jens Freiding in seiner Dissertation - Extrusion von technischen ZSM-5-Kontakten und ihre Anwendung im MTO-Prozess, Seite 43-47, Universitätsverlag Karlsruhe 2009, dass bei der Herstellung von Katalysatoren Pseudoböhmit als Binder dienen kann. In der Regel liegt Pseudoböhmit in Form von Agglomeraten vor und wird im Herstellungsprozess der Katalysatoren meist durch den Schritt der Peptisierung in seine Primärpartikel zerlegt. Üblicherweise werden die Ausgangsmaterialien in einem Kneter gemischt und anschließend extrudiert. Die Extrudate werden anschließend getrocknet und kalziniert. Die Kalzination kann beispielsweise in einem Muffelofen mit einer Aufheizrate von 2 °C/min von Raumtemperatur auf 550 °C, einer Haltezeit von 180 min und abschließender Abkühlung auf Raumtemperatur, erfolgen. Durch diese thermische Behandlung spaltet der Pseudoböhmit Wasser ab und geht in γ-Al₂O₃ über.

Demzufolge erfolgt in einer bevorzugten Ausführungsform die Dehydratisierung durch Kalzinierung.

US 2004/0126315 A1 beschreibt beispielsweise eine weitere mögliche Anwendung des Pseudoböhmits bei der Herstellung von Katalysator-Trägern. Hierbei kann das Pseudoböhmit meist geformt (beispielsweise Extrusion oder Tablettierung) und dann zu γ-Al₂O₃ kalziniert werden. Auch hier wird das geformte Pseudoböhmit zuerst getrocknet und anschließend kalziniert. Dabei wird bevorzugt bei einer Temperatur bis 150 ° C getrocknet. Anschließend erfolgt die Kalzinierung bei 350 bis 900 ° C für mindestens 0,5 Stunden und bevorzugt bei 500 bis 850 ° C für 0,5 bis 5 Stunden.

### Beispiele

### Versuchsdurchführungen

### Überprüfen der Peptisierbarkeit

Die Peptisierbarkeit wurde nach folgendem Schema getestet:
Das Pseudoböhmit wurde in einem Trockenschrank bei 105 °C bis zur Gewichtskonstanz getrocknet und in einem Labormörser zerkleinert. Im Anschluss wurde in einem Becherglas vollentsalztes Wasser vorgelegt und das getrocknete Pseudoböhmit unter ständigem Rühren zugegeben bis ein Feststoffgehalt von 7 Gew.-% erreicht wurde. Danach wurde der pH-Wert der Suspension mithilfe von Salpetersäure (HNO₃) auf einen Wert von 2 abgesenkt und für mindestens 30 Minuten weiter verrührt. In diesem Zeitraum muss regelmäßig geprüft werden, ob sich der pH-Wert ändert und gegebenenfalls erneut auf einen Wert von 2 eingestellt werden. Sobald der pH-Wert konstant bleibt, werden 20 ml der Suspension in ein Reagenzglas (Höhe 160 mm, Innendurchmesser 13,8 mm) gegeben und über 6 Tage das Sedimentationsverhalten beobachtet. Die 20 ml entsprechen im Reagenzglas einer Füllhöhe von 135 mm. Ausschlaggebend für die Bewertung der Peptisierbarkeit ist die Höhe des Sediments am Boden des Reagenzglases in Millimeter nach 6 Tagen. Außerdem kann die Transparenz oder Trübung des resultierenden Sols beurteilt werden. Ein Pseudoböhmit weist gute Eigenschaften auf, wenn dieser möglichst wenig Sediment (kleiner 2 mm Höhe) sowie möglichst klar und transparent ist.

### Laugenherstellung

Für die Herstellung einer Natriumaluminatlauge wurden 3,6 Liter 50 %-ige Natronlauge mit vollentsalztem Wasser im Verhältnis 1:1 verdünnt und auf 108 °C erhitzt. Anschließend wurden 3,8 kg Aluminiumhydroxid zugeben. Diese Suspension wurde für 3 Stunden bei 108 °C gerührt und anschließend über einen Glasfaser Filter Grade 693 abfiltriert. Die filtrierte Natriumaluminatlauge, im folgenden Klarlauge genannt, wurde titriert. In der Klarlauge war 238 g/l Aluminium (berechnet als Al₂O₃) und 192 g/l Natrium (berechnet als Na₂O) gelöst. Ausgehend von diesen Werten wurde die Klarlauge schrittweise verdünnt und NaOH-Plättchen zugegeben, bis die Klarlauge die gewünschte Zusammensetzung aufwies.

### Fällung mit Ameisensäure

### Beispiel 1

Ausgehend von den Analysenwerten wurde die Klarlauge schrittweise verdünnt und NaOH-Plättchen zugegeben, bis die verdünnte Klarlauge eine Zusammensetzung mit einer Aluminiumkonzentration von 15,1 g/l (berechnet als Al₂O₃, "gelöstes Al₂O₃") und eine Natriumkonzentration von 14,6 g/l (berechnet als Na₂O, "Na₂O frei") aufwies. Dies entspricht einem molaren Verhältnis Na:Al von 1,6.

In die verdünnte Klarlauge wurde über einen Zeitraum von 10 Minuten kontinuierlich Ameisensäure (90 Gew.-%) zugegeben bis ein pH-Wert von 9 erreicht wurde. Für 7 Liter verdünnte Klarlauge wurden ca. 133 g Ameisensäure benötigt. Die Fällung erfolgte hierbei bei Raumtemperatur (18-22 °C) und unter starkem Rühren.

Von der Suspension wurden 3,5 Liter über einen Glasfaser-Filter abfiltriert und mit 0,4 Liter heißem VE-Wasser nachgewaschen. Der Filterrückstand wurde anschließend mit 2,5 Liter heißem (90-100 °C) VE-Wasser für 10 Minuten aufgerührt, wieder abfiltriert und mit 0,4 Liter heißem VE-Wasser gewaschen. Diese Schritte wurden drei weitere Male wiederholt, wobei sich dabei die Dispergierzeit schrittweise auf 15 bzw. 20 bzw. 40 Minuten verlängerte. Der Natriumgehalt im Filterkuchen lag nach dem ersten Resuspendieren bei 0,738 Gew.-% (berechnet als Na₂O), nach dem zweiten bei 0,101 Gew.-%, nach dem dritten bei 0,013 Gew.-% und nach dem vierten Resuspendieren bei 0,001 Gew.-%. Die spezifische Oberfläche nach der BET-Methode lag bei 276 m²/g, der Glühverlust (105 - 1000 °C) bei 21,9 Gew.-%. Die XRD Aufnahmen zeigten, dass sich ausschließlich Pseudoböhmit gebildet hat. Der vorliegende Pseudoböhmit zeigte eine sehr gute Peptisierbarkeit. Die Dicke des Sediments war bei kleiner 1 mm und das Sol war sehr klar.

### Beispiel 2

Ausgehend von Analysenwerten wurde die Klarlauge schrittweise verdünnt und NaOH-Plättchen zugegeben, bis die verdünnte Klarlauge eine Zusammensetzung von 17,4 g/l gelöstes Al₂O₃ und 16,9 g/l Na₂O frei hatte.

In die verdünnte Klarlauge wurde über einen Zeitraum von 10 Minuten kontinuierlich Ameisensäure (90 Gew.-%) zugegeben bis ein pH-Wert von 8 erreicht wurde. Für 3,4 Liter verdünnte Klarlauge wurden ca. 68,5 g Ameisensäure benötigt. Die Fällung erfolgte hierbei bei Raumtemperatur (18-22 °C) und unter starkem Rühren.

Die Suspension wurde über einen Glasfaser-Filter abfiltriert und mit 1 Liter heißem VE-Wasser nachgewaschen. Der Filterrückstand wurde anschließend mit 1 Liter heißem (90-100 °C) VE-Wasser für 20 Minuten aufgerührt und wieder abfiltriert. Diese Schritte wurden noch viermal wiederholt. Die Dispergierzeit betrug jeweils 20 Minuten. Der Natriumgehalt im Filterkuchen lag nach dem ersten Resuspendieren bei 3,373 Gew.-% (berechnet als Na₂O), nach dem zweiten bei 0,560 Gew.-%, nach dem dritten bei 0,140 Gew.-%, nach dem vierten Resuspendieren bei 0,030 Gew.-% und nach dem fünften bei 0,010 Gew.-%. Die spezifische Oberfläche nach der BET-Methode lag bei 264 m²/g, der Glühverlust (105 - 1000 °C) bei 23 Gew.-%. Die XRD Aufnahmen zeigten, dass sich ausschließlich Pseudoböhmit gebildet hat. Der vorliegende Pseudoböhmit zeigte eine gute Peptisierbarkeit. Die Dicke des Sediments war bei ca.1 mm und das Sol war leicht trüb, aber noch transparent.

### Beispiel 3

Ausgehend von den Analysenwerten wurde die Klarlauge schrittweise verdünnt und NaOH-Plättchen zugegeben, bis die verdünnte Klarlauge eine Zusammensetzung von 10,2 g/l gelöstes Al₂O₃ und 10,6 g/l Na₂O frei hatte.

In die verdünnte Klarlauge wurde über einen Zeitraum von 10 Minuten kontinuierlich Ameisensäure (90%) zugegeben bis ein pH-Wert von 9 erreicht wurde. Für 2,5 Liter verdünnte Klarlauge wurden ca. 47,5 g Ameisensäure benötigt. Die Fällung erfolgte hierbei bei Raumtemperatur (18-22 °C) und unter starkem Rühren.

Die Suspension wurde über einen Glasfaser-Filter abfiltriert. Der Filterrückstand wurde anschließend mit 1,5 Liter heißem (90-100 °C) VE-Wasser für 10 Minuten aufgerührt und anschließend filtriert. Der Natriumgehalt im Filterkuchen lag bei 0,074 Gew.-% (berechnet als Na₂O). Die spezifische Oberfläche nach der BET-Methode lag bei 267 m²/g, der Glühverlust (105 - 1000 °C) bei 21,8 Gew.-%. Die XRD Aufnahmen zeigten, dass sich ausschließlich Pseudoböhmit gebildet hat. Der vorliegende Pseudoböhmit zeigte eine gute Peptisierbarkeit. Die Dicke des Sediments war bei kleiner 1 mm und das Sol war leicht trüb, aber noch transparent.

### Beispiel 4

Ausgehend von den Analysenwerten wurde die Klarlauge schrittweise verdünnt und NaOH-Plättchen zugegeben, bis die verdünnte Klarlauge eine Zusammensetzung von 9,8 g/l gelöstes Al₂O₃ und 10,1 g/l Na₂O frei hatte.

In die verdünnte Klarlauge wurde über einen Zeitraum von 10 Minuten kontinuierlich Ameisensäure (90%) zugegeben bis ein pH-Wert von 9 erreicht wurde. Für 1,5 Liter verdünnte Klarlauge wurden ca. 28,6 g Ameisensäure benötigt. Die Fällung erfolgte hierbei bei Raumtemperatur (18-22 °C) und unter starkem Rühren.

Die Suspension wurde über einen Glasfaser-Filter abfiltriert und mit 1 Liter heißem VE-Wasser nachgewaschen. Der Filterrückstand wurde anschließend mit 1 Liter heißem (90-100 °C) VE-Wasser für 20 Minuten aufgerührt und anschließend filtriert. Der Natriumgehalt im Filterkuchen lag bei 0,017 Gew.-% (berechnet als Na₂O). Die spezifische Oberfläche nach der BET-Methode lag bei 257 m²/g, der Glühverlust (105 - 1000 °C) bei 22,3 Gew.-%. Die XRD Aufnahmen zeigten, dass sich ausschließlich Pseudoböhmit gebildet hat. Der vorliegende Pseudoböhmit zeigte eine sehr gute Peptisierbarkeit. Die Dicke des Sediments war bei ca. 1 mm und das Sol war sehr klar.

### Vergleichsbeispiel 5 - Fällung mit CO₂

Ausgehend von den Analysenwerten wurde die Klarlauge schrittweise verdünnt und NaOH-Plättchen zugegeben, bis die verdünnte Klarlauge eine Zusammensetzung von 11,5 g/l gelöstes Al₂O₃ und 12,2 g/l Na₂O frei hatte.

In 3,5 Liter verdünnte Klarlauge wurde über einen Zeitraum von 35 Minuten kontinuierlich CO₂ eingebracht bis ein pH-Wert von 9 erreicht war. Die Fällung erfolgte hierbei bei Raumtemperatur (18-22 °C) und unter starkem Rühren. Für die 3,5 Liter verdünnte Klarlauge wurden 58,4 g CO₂ unter Umgebungsdruck eingeleitet. Das CO₂ wurde in der Nähe des Rührers eingeleitet, um ein möglichst gutes Dispergieren des Gases zu erzielen.

Die 3,5 Liter Suspension wurden über einen Glasfaser-Filter abfiltriert und mit 0,4 Liter heißem VE-Wasser nachgewaschen. Der Filterrückstand wurde anschließend mit 2,5 Liter heißem (90-100 °C) VE-Wasser für 10 Minuten aufgerührt, wieder abfiltriert und mit 0,4 Liter heißem VE-Wasser gewaschen. Diese Schritte wurden drei weitere Male wiederholt, wobei sich dabei die Dispergierzeit schrittweise auf 15 bzw. 20 bzw. 40 Minuten verlängerte. Der Natriumoxidgehalt im Filterkuchen lag nach dem ersten Resuspendieren bei 1,89 Gew.-%, nach dem zweiten bei 0,181 Gew.-%, nach dem dritten bei 0,019 Gew.-% und nach dem vierten bei 0,004 Gew.-%. Die spezifische Oberfläche nach der BET-Methode lag bei 289 m²/g, der Glühverlust (105 - 1000 °C) bei 22,0 Gew.-%. Die XRD Aufnahmen zeigten, dass sich ausschließlich Pseudoböhmit gebildet hat. Der vorliegende Pseudoböhmit zeigte eine schlechte und nicht ausreichende Peptisierbarkeit. Die Dicke des Sediments war bei ca. 10 mm und das Sol war trüb und nicht transparent.

## Patentansprüche

1. Verfahren zur Herstellung von Pseudoböhmit den Schritt enthaltend
a₀) Fällen von Pseudoböhmit aus einer wässrigen Alkalimetallaluminatlösung mit Hilfe einer wässrigen Fällungslösung, die Ameisensäure enthält, wobei eine Reaktionssuspension aus Pseudoböhmit, Alkalimetallformiat und einer wässrigen Reaktionsflüssigkeit erhalten wird, wobei der pH-Wert nach erfolgter Fällung in der Reaktionsflüssigkeit einen Wert im Bereich von 8 bis 10 aufweist und wobei nach Schritt a₀) ein Schritt
a₁) erfolgt, bei dem das ausgefallene Pseudoböhmit und die Reaktionsflüssigkeit getrennt werden.

2. Verfahren nach Anspruch 1, **dadurch gekennzeichnet, dass** die wässrige Alkalimetallaluminatlösung eine wässrige Natriumaluminatlösung ist.

3. Verfahren nach Anspruch 1 oder 2, **dadurch gekennzeichnet, dass** die wässrige Alkalimetallaluminatlösung vor Beginn der Fällung eine Aluminiumkonzentration im Bereich von 1 g/l bis 50 g/l Lösung, vorzugsweise im Bereich von 4 g/l bis 22 g/l Lösung, mehr bevorzugt im Bereich von 8 g/l bis 16 g/l Lösung, jeweils berechnet als Al₂O₃, aufweist.

4. Verfahren nach einem oder mehreren der Ansprüche 1 bis 3, **dadurch gekennzeichnet, dass** die Alkalimetallionenkonzentration der wässrigen Alkalimetallaluminatlösung vor Fällung im Bereich von 32 mmol/I bis 1,6 mol/l Lösung, vorzugsweise im Bereich von 0,13 mol/l bis 0,71 mol/l Lösung, mehr bevorzugt von 0,25 mol/l bis 0,5 mol/l Lösung, liegt.

5. Verfahren nach einem oder mehreren der Ansprüche 1 bis 4, **dadurch gekennzeichnet, dass** das Molverhältnis von Alkalimetall zu Aluminium in der wässrige Alkalimetallaluminatlösung vor Beginn der Fällung im Bereich von 1,1 bis 3,0, bevorzugt im Bereich von 1,3 bis 2,2, mehr bevorzugt im Bereich von 1,4 bis 1,9, weiter mehr bevorzugt im Bereich von 1,5 bis 1,8, liegt.

6. Verfahren nach einem oder mehreren der Ansprüche 1 bis 5, **dadurch gekennzeichnet, dass** die wässrige Fällungslösung, die Ameisensäure enthält, nur aus Wasser und Ameisensäure besteht und der Gewichtsanteil der Ameisensäure in der Fällungslösung vorzugsweise einen Wert im Bereich von 1 Gew.-% bis 99,9 Gew.-%, bevorzugt von 10 Gew.-% bis 99 Gew.-%, mehr bevorzugt von 80 Gew.-% bis 92 Gew.-%, aufweist.

7. Verfahren nach einem oder mehreren der Ansprüche 1 bis 6, **dadurch gekennzeichnet, dass** in Schritt a₀) die wässrige Fällungslösung, die Ameisensäure enthält, zu der wässrigen Alkalimetallaluminatlösung, vorzugsweise unter ständiger Durchmischung, zugegeben wird.

8. Verfahren nach einem oder mehreren der Ansprüche 1 bis 7, **dadurch gekennzeichnet, dass** Schritt a₀) in einem Zeitraum von 1 Minute bis 120 Minuten, vorzugsweise von 4 Minuten bis 30 Minuten, mehr bevorzugt von 6 Minuten bis 15 Minuten, erfolgt.

9. Verfahren nach einem oder mehreren der Ansprüche 1 bis 8, **dadurch gekennzeichnet, dass** Schritt a₀) bei einer Temperatur im Bereich von 0,1 °C bis 80 °C, vorzugsweise von 5 °C bis 50 °C, mehr bevorzugt von 10 °C bis 30 °C, durchgeführt wird.

10. Verfahren nach einem oder mehreren der Ansprüche 1 bis 9, **dadurch gekennzeichnet, dass** vor Schritt a₀) die wässrige Alkalimetallaluminatlösung in einem Schritt a₋₁) durch Auflösen von Aluminiumhydroxid, bevorzugt Gibbsit, mit Alkalilauge erfolgt.

11. Verfahren nach einem oder mehreren der Ansprüche 1 bis 10, **dadurch gekennzeichnet, dass** nach Schritt a₁) ein Schritt a₂) erfolgt, bei dem das abgetrennte Pseudoböhmit mehrfach gewaschen wird, vorzugsweise in einem Gegenstromverfahren.

12. Verfahren nach einem oder mehreren der Ansprüche 1 bis 11, **dadurch gekennzeichnet, dass** aus der abgetrennten Reaktionsflüssigkeit das Alkalimetallformiat abgetrennt und vorzugsweise nach Überführung des Formiats in Ameisensäure, bevorzugt mit Hilfe einer starken Säure und optional anschließender Destillation oder Rektifikation, diese dem Schritt a₀) wieder zugeführt wird.

13. Verfahren zur Herstellung von gamma-Aluminiumoxid die Schritte enthaltend
a) Herstellen von Pseudoböhmit nach einem der Ansprüche 1 bis 12;
b) Dehydratisierung des in Schritt a) hergestellten Pseudoböhmits unter Erhalt des gamma-Aluminiumoxids.

## Claims

1. Process for producing pseudoboehmite, comprising the step of
a₀) precipitating pseudoboehmite from an aqueous alkali metal aluminate solution with the aid of an aqueous precipitation solution comprising formic acid, wherein a reaction suspension of pseudoboehmite, alkali metal formate and an aqueous reaction liquid is obtained, wherein the pH after precipitation in the reaction liquid has a value in the range from 8 to 10 and wherein after step a₀), a step
a₁) takes place in which the precipitated pseudobohmite and the reaction liquid are separated.

2. Process according to Claim 1, **characterized in that** the aqueous alkali metal aluminate solution is an aqueous sodium aluminate solution.

3. Process according to Claim 1 or 2, **characterized in that** the aqueous alkali metal aluminate solution before the start of precipitation has an aluminium concentration in the range from 1 g/l to 50 g/l solution, preferably in the range from 4 g/l to 22 g/l solution, more preferably in the range from 8 g/l to 16 g/l solution, in each case calculated as Al₂O₃.

4. Process according to one or more of Claims 1 to 3, **characterized in that** the alkali metal ion concentration of the aqueous alkali metal aluminate solution before precipitation is in the range from 32 mmol/l to 1.6 mol/l solution, preferably in the range from 0.13 mol/l to 0.71 mol/l solution, more preferably from 0.25 mol/l to 0.5 mol/l solution.

5. Process according to one or more of Claims 1 to 4, **characterized in that** the molar ratio of alkali metal to aluminium in the aqueous alkali metal aluminate solution before the start of precipitation is in the range from 1.1 to 3.0, preferably in the range from 1.3 to 2.2, more preferably in the range from 1.4 to 1.9, more preferably still in the range from 1.5 to 1.8.

6. Process according to one or more of Claims 1 to 5, **characterized in that** the aqueous precipitation solution comprising formic acid consists only of water and formic acid and the weight fraction of the formic acid in the precipitation solution preferably has a value in the range from 1% to 99.9% by weight, preferably from 10% to 99% by weight, more preferably from 80% to 92% by weight.

7. Process according to one or more of Claims 1 to 6, **characterized in that** in step a₀) the aqueous precipitation solution comprising formic acid is added to the aqueous alkali metal aluminate solution, preferably with constant mixing.

8. Process according to one or more of Claims 1 to 7, **characterized in that** step a₀) takes place in a period of from 1 minute to 120 minutes, preferably from 4 minutes to 30 minutes, more preferably from 6 minutes to 15 minutes.

9. Process according to one or more of Claims 1 to 8, **characterized in that** step a₀) is carried out at a temperature in the range from 0.1°C to 80°C, preferably from 5°C to 50°C, more preferably from 10°C to 30°C.

10. Process according to one or more of Claims 1 to 9, **characterized in that** before step a₀), the aqueous alkali metal aluminate solution takes place in a step a₋₁) by dissolution of aluminium hydroxide, preferably gibbsite, with alkali metal hydroxide solution.

11. Process according to one or more of Claims 1 to 10, **characterized in that** after step a₁), a step a₂) takes place in which the pseudoboehmite separated off is washed multiple times, preferably in a counter-current process.

12. Process according to one or more of Claims 1 to 11, **characterized in that** the alkali metal formate is separated off from the reaction liquid separated off, and preferably after conversion of the formate into formic acid, preferably with the aid of a strong acid and optionally subsequent distillation or rectification, it is resupplied to step a₀).

13. Process for producing gamma-alumina, comprising the steps of
a) producing pseudoboehmite according to any of Claims 1 to 12;
b) dehydrating the pseudoboehmite produced in step a), to give the gamma-alumina.

## Revendications

1. Procédé de préparation de pseudoboehmite contenant l'étape
a₀) précipitation de pseudoboehmite à partir d'une solution aqueuse d'aluminate de métal alcalin à l'aide d'une solution de précipitation aqueuse qui contient de l'acide formique, une suspension de réaction constituée de pseudoboehmite, de formiate de métal alcalin et d'un liquide aqueux de réaction étant obtenue, le pH après la fin de la précipitation dans le liquide de réaction présentant une valeur dans la plage de 8 à 10 et après l'étape a₀), une étape
a₁) ayant lieu, dans laquelle la pseudoboehmite séparée par précipitation et le liquide de réaction sont séparés.

2. Procédé selon la revendication 1, **caractérisé en ce que** la solution aqueuse d'aluminate de métal alcalin est une solution aqueuse d'aluminate de sodium.

3. Procédé selon la revendication 1 ou 2, **caractérisé en ce que** la solution aqueuse d'aluminate de métal alcalin présente, avant le début de la précipitation, une concentration en aluminium dans la plage de 1 g/l à 50 g/l de solution, de préférence dans la plage de 4 g/l à 22 g/l de solution, plus préférablement dans la plage de 8 g/l à 16 g/l de solution, à chaque fois calculée sous forme de Al₂O₃.

4. Procédé selon l'une ou plusieurs des revendications 1 à 3, **caractérisé en ce que** la concentration en ions de métal alcalin de la solution aqueuse d'aluminate de métal alcalin avant la précipitation se situe dans la plage de 32 mmoles/l à 1,6 mole/l de solution, de préférence dans la plage de 0,13 mole/l à 0,71 mole/l de solution, plus préférablement de 0,25 mole/l à 0,5 mole/l de solution.

5. Procédé selon l'une ou plusieurs des revendications 1 à 4, **caractérisé en ce que** le rapport molaire de métal alcalin à aluminium dans la solution aqueuse d'aluminate de métal alcalin avant le début de la précipitation se situe dans la plage de 1,1 à 3,0, de préférence dans la plage de 1,3 à 2,2, plus préférablement dans la plage de 1,4 à 1,9, encore plus préférablement dans la plage de 1,5 à 1,8.

6. Procédé selon l'une ou plusieurs des revendications 1 à 5, **caractérisé en ce que** la solution aqueuse de précipitation qui contient de l'acide formique ne contient que de l'eau et de l'acide formique et la proportion pondérale de l'acide formique dans la solution de précipitation présente de préférence une valeur dans la plage de 1% en poids à 99,9% en poids, de préférence de 10% en poids à 99% en poids, plus préférablement de 80% en poids à 92% en poids.

7. Procédé selon l'une ou plusieurs des revendications 1 à 6, **caractérisé en ce que**, dans l'étape a₀), la solution aqueuse de précipitation, qui contient de l'acide formique, est ajoutée à la solution aqueuse d'aluminate de métal alcalin, de préférence sous agitation continue.

8. Procédé selon l'une ou plusieurs des revendications 1 à 7, **caractérisé en ce que** l'étape a₀) a lieu en une période de temps de 1 minute à 120 minutes, de préférence de 4 minutes à 30 minutes, plus préférablement de 6 minutes à 15 minutes.

9. Procédé selon l'une ou plusieurs des revendications 1 à 8, **caractérisé en ce que** l'étape a₀) est effectuée à une température dans la plage de 0,1°C à 80°C, de préférence de 5°C à 50°C, plus préférablement de 10°C à 30°C.

10. Procédé selon l'une ou plusieurs des revendications 1 à 9, **caractérisé en ce que**, avant l'étape a₀), la solution aqueuse d'aluminate de métal alcalin a lieu dans une étape a₋₁) par dissolution d'hydroxyde d'aluminium, de préférence de gibbsite, à l'aide de lessive alcaline.

11. Procédé selon l'une ou plusieurs des revendications 1 à 10, **caractérisé en ce que**, après l'étape a₁), une étape a₂) a lieu, dans laquelle la pseudoboehmite séparée est lavée plusieurs fois, de préférence dans un procédé à contre-courant.

12. Procédé selon l'une ou plusieurs des revendications 1 à 11, **caractérisé en ce que** le formiate de métal alcalin est séparé à partir du liquide de réaction séparé et il est recyclé dans l'étape a₀), de préférence après transformation du formiate en acide formique, de préférence à l'aide d'un acide fort et d'une distillation ou d'une rectification éventuelle consécutive.

13. Procédé de préparation de gamma-oxyde d'aluminium contenant les étapes
a) préparation de pseudoboehmite selon l'une des revendications 1 à 12 ;
b) déshydratation de la pseudoboehmite préparée dans l'étape a) avec obtention du gamma-oxyde d'aluminium.
